# EUROPEAN PATENT APPLICATION

(11) **EP 4 571 959 A1**
(43) Date of publication of application: **18.06.2025**
(21) Application number: 23889959.5
(22) Date of filing: 03.01.2023
(51) Int. Cl.: H01M 50/141

(54) **COVER ASSEMBLY, BATTERY, AND ELECTRIC DEVICE**

(30) Priority: 16.11.2022 CN 202223089020 U
(71) Applicant: Contemporary Amperex Technology Co., Limited, Ningde, Fujian 352100 (CN)
(72) Inventor: WU, Dan, Ningde, Fujian 352100 (CN); ZHUANG, Tao, Ningde, Fujian 352100 (CN); DING, Yue, Ningde, Fujian 352100 (CN)
(74) Representative: Gong, Jinping
(86) International application number: PCT/CN2023/070199
(87) International publication number: WO 2024/103506

(57) **Abstract**

The present application is applicable to the field of batteries, and provides a cover assembly, a battery and an electrical device. The cover assembly includes an end cap and an insulator. The end cap includes a cap body and a bulge portion protrusively disposed on the cap body. The bulge portion and the cap body are integrally molded. The insulator is internally provided with a mounting hole, and the bulge portion is clamped in the mounting hole to connect the insulator to the end cap. The cover assembly provided by the present application has good waterproof performance, and is convenient to assemble and relatively low in cost.

## Description

### CROSS-REFERENCE TO RELATED APPLICATIONS

The present application claims priority to Chinese Patent Application No. 202223089020.X, filed with the China National Intellectual Property Administration on November 16, 2022 and entitled "COVER ASSEMBLY, BATTERY AND ELECTRICAL DEVICE", which is incorporated herein by reference in its entirety.

### TECHNICAL FIELD

The present application relates to the field of batteries, and in particular, to a cover assembly, a battery and an electrical device.

### BACKGROUND

Energy conservation and emission reduction are key to sustainable development of the automobile industry, and electric vehicles have attracted extensive attention because of their advantage of environmental friendliness. Power batteries are an important part of the electric vehicles. Typically, a plurality of battery cells or battery modules are assembled into a battery pack and then put into an electrical vehicle.

When a battery is assembled, an end cap and an insulator of the battery are fixedly connected. However, a junction of the end cap and the insulator is prone to water ingress, resulting in poor waterproof performance of the battery.

### Technical Problems

In view of this, embodiments of the present application provide a cover assembly, a battery and an electrical device to solve the problem of poor waterproof performance after fixing of an end cap and an insulator.

### Technical Solution

An embodiment of the present application provides a cover assembly, including an end cap and an insulator. The end cap includes a cap body and a bulge portion protrusively disposed on the cap body. The bulge portion and the cap body are integrally molded. The insulator is internally provided with a mounting hole, and the bulge portion is clamped in the mounting hole to connect the insulator to the end cap.

The above cover assembly includes the end cap and the insulator. The end cap includes the cap body and the bulge portion integrally molded with the cap body. The insulator is internally provided with the mounting hole, and the bulge portion is clamped in the mounting hole to connect the insulator to the end cap. Therefore, the cover assembly may be clamped through structures disposed on the end cap and the insulator without the use of rivets, adhesives or other external parts, and the situation of water ingress at junctions of the external parts and the cover assembly is also avoided, thereby improving waterproof performance of the battery.

In some embodiments, the bulge portion is connected to the mounting hole in an interference-fit manner.

By adopting the above technical solution, a gap between the bulge portion and the mounting hole is closed, which avoids moisture from flowing to the mounting hole via the bulge portion and further flowing into battery modules, thereby improving waterproof performance of the battery modules.

In some embodiments, the mounting hole includes a first hole and a second hole that are coaxially disposed, the first hole is closer to the cap body than the second hole, a maximum cross-section dimension of the first hole is less than that of the second hole, and the bulge portion is connected to the first hole in an interference-fit manner and extends into the second hole.

By adopting the above technical solution, the mounting hole includes the first hole and the second hole, and the bulge portion may be connected to the first hole in the interference-fit manner, such that the bulge portion is clamped in the first hole to avoid the bulge portion from detaching from the first hole, and in turn, the connection between the end cap and the insulator is relatively stable.

In some embodiments, the bulge portion includes a first end connected to the cap body and a second end coaxially connected to the first end, the second end extends into the second hole, and a clearance is disposed between the second end and a hole wall of the second hole.

By adopting the above technical solution, the first end of the bulge portion is clamped in the first hole, and the second end is in clearance fit with the second hole, which can not only realize fixed clamping between the bulge portion and the mounting hole, but also facilitate disassembly and maintenance.

In some embodiments, a cross-section dimension of the second end gradually decreases in a direction away from the first end.

By adopting the above technical solution, the cross-section dimension of the second end gradually decreases in the direction away from the first end. That is, the second end forms a guiding portion of an inward indented structure, which facilitates mounting of the bulge portion into the mounting hole.

In some embodiments, a cross-section dimension of the first end gradually increases in a direction away from the cap body.

By adopting the above technical solution, it is convenient for the bulge portion to be clamped into the mounting hole. Moreover, after the end cap is connected to the insulator, no clearance exists between a position of the first end having a relatively large cross section and the mounting hole, and waterproof performance is good.

In some embodiments, the bulge portion is a hollow column.

By adopting the above technical solution, the bulge portion is of a closed structure and has good waterproof performance. The bulge portion has a simple forming method, and the cost of the cover assembly is relatively low. In addition, the connection strength between the bulge portion and the cap body is relatively high.

In some embodiments, the bulge portion includes at least two snap-hooks, and the snap-hooks are clamped in the mounting hole.

By adopting the above technical solution, the bulge portion includes the at least two snap-hooks, and the bulge portion is clamped in the mounting hole through the snap-hooks. Since the bulge portion and the cap body are integrally molded, a junction of the bulge portion and the mounting hole has good waterproof performance.

In some embodiments, a boss protruding toward the end cap is disposed on the insulator, and the mounting hole is formed in the boss.

By disposing the mounting hole in the boss, the mounting hole may have a certain depth, thereby improving the connection strength between the bulge portion and the mounting hole.

In some embodiments, both bulge portion and the mounting hole are plural in number, a plurality of bulge portions are disposed at an edge of the cap body at intervals, and at least one of the bulge portions is disposed in a middle of the cap body.

By adopting the above technical solution, both the edge and the middle of the end cap can be fixedly connected to the insulator to prevent edge warping or middle warping, and the end cap and the insulator have good flatness.

In some embodiments, an edge of the insulator is provided with a flange by protruding toward the cap body, the mounting hole is formed on the flange, and the bulge portion is disposed on a position of the cap body corresponding to the mounting hole.

By adopting the above technical solution, the edge of the insulator may be connected to the end cap to avoid the insulator and/or the cap body from edge warping and deforming.

A second aspect of the present application provides a battery, including the cover assembly according to the first aspect.

A third aspect of the present application provides an electrical device, including the battery according to the second aspect. The battery is configured to provide electrical energy.

The foregoing description is merely an overview of the technical solutions of the present application. The following describes specific embodiments of the present application illustratively to enable a clearer understanding of the technical solutions of the present application, enable implementation of the technical solutions based on the content of the specification, and make the foregoing and other objectives, features, and advantages of the present application more evident and comprehensible.

### BRIEF DESCRIPTION OF DRAWINGS

To describe technical solutions in embodiments of the present application more clearly, the following outlines drawings to be used in the embodiments or conventional technical description. Evidently, the drawings in the following description are merely illustrative of some embodiments of the present application. A person of ordinary skill in the art may further derive other drawings from such drawings without making any creative efforts.
FIG. 1 is a schematic three-dimensional diagram of a cover assembly provided by an embodiment of the present application;
FIG. 2 is a schematic three-dimensional exploded view of the cover assembly shown in FIG. 1;
FIG. 3A is a close-up view of a part A in the cover assembly shown in FIG. 2;
FIG. 3B is a close-up view of a part B in the cover assembly shown in FIG. 2;
FIG. 4 is a schematic three-dimensional diagram of an end cap in the cover assembly shown in FIG. 2;
FIG. 5 is a close-up view of a part C in the end cap shown in FIG. 4;
FIG. 6 is a three-dimensional sectional view of the cover assembly shown in FIG. 1;
FIG. 7 is a close-up view of a part D in the cover assembly shown in FIG. 6;
FIG. 8 is a close-up view of the part D in the cover assembly shown in FIG. 6 in another embodiment; and
FIG. 9 is a schematic structural diagram of a vehicle provided by an embodiment of the present application.

The meaning of reference numerals is:
1000. vehicle; 100. battery; 200. controller; 300. motor;
10. cover assembly;
11. end cap; 111. cap body; 112. bulge portion; 1121. first end; 1122. second end; 1123. snap-hook;
12. insulator; 121. mounting hole; 1211. first hole; 1212. second hole; 122. boss; 123. flange.

### DETAILED DESCRIPTION OF EMBODIMENTS

Embodiments of the technical solution of the present application are described in detail below in conjunction with the accompanying drawings. The following embodiments are only used to more clearly illustrate the technical solution of the present application, and therefore, are merely examples and cannot be used to limit the protection scope of the present application.

Unless otherwise defined, all technical and scientific terms used herein bear the same meanings as what is normally understood by a person skilled in the technical field of the present application. The terms used herein are merely intended to describe specific embodiments but not to limit the present application. The terms "include" and "contain" and any variations thereof used in the specification, claims, and brief description of drawings of the present application are intended as non-exclusive inclusion.

In the description of the embodiments of the present application, the terms "first", "second", and the like are merely intended to distinguish between different objects, and shall not be understood as any indication or implication of relative importance or any implicit indication of the number, particular sequence or primary-secondary relationship of the technical features indicated. In the descriptions of the embodiments of the present application, "a plurality of" means two or more, unless otherwise specifically defined.

Reference to "embodiments" in this specification means that particular features, structures, or characteristics described with reference to the embodiments may be included in at least one embodiment of the present application. Occurrence of the phrase in various places in this specification does not necessarily refer to the same embodiment, nor is an independent or alternative embodiment that is mutually exclusive with other embodiments. It is understood explicitly and implicitly by a person skilled in the art that the embodiments described in this specification may be combined with other embodiments.

In the description of the embodiments of the present application, the term "and/or" describes only an association relationship between associated objects and represents that three relationships may exist. For example, A and/or B may represent the following three cases: only A exists, both A and B exist, and only B exists. In addition, the character "/" in this specification generally indicates an "or" relationship between the associated objects.

In the description of embodiments of the present application, the term "a plurality of" means two or more (including two). Similarly, "a plurality of groups" means two or more groups (including two groups), and "a plurality of pieces" means two or more pieces (including two pieces).

In the description of the embodiments of the present application, orientation or positional relationships indicated by technical terms such as "center", "longitudinal", "transverse", "length", "width", "thickness", "upper", "lower", "front", "back", "vertical", "horizontal", "top", "bottom", "inner" and "outer" are based on the orientation or positional relationships shown in the drawings, are merely intended for ease of description of the embodiments of the present application and simplification of the description, but do not indicate or imply that the device or element referred to must have a particular orientation or be constructed and operated in a particular orientation, and therefore are not to be understood as a limitation on the present application.

In the descriptions of the embodiments of the present application, unless otherwise specified and defined explicitly, the technical terms "mounting", "connection", "join", and "fastening" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. A person of ordinary skill in the art can understand specific meanings of these terms in the embodiments of the present application as appropriate to specific situations.

Currently, energy conservation and emission reduction are key to sustainable development of automobiles, and electric vehicles have attracted extensive attention because of their advantage of environmental friendliness. Power batteries are an important part of the electric vehicles. Typically, a plurality of battery cells or battery modules are assembled into a battery pack and then put into an electrical vehicle.

A power battery may include, but not limited to, three forms: a battery cell, a battery module and a battery pack. The battery cell is a minimum unit of the power battery, and generally includes a housing, a cover plate, a cell assembly, a tank and other functional components. In applications, a plurality of battery cells may be connected through an electrical connection structure or a fixing structure and fit a thermal management system to be assembled into a battery, and the battery may be directly assembled on an electrical device to provide electrical energy for the electrical device. Or, the plurality of battery cells may be first assembled into battery modules through the electrical connection structure, the fixing structure, or the like, and then the plurality of battery modules fit the thermal management system to be assembled on the electrical device to provide the electrical energy for the electrical device. Or, the plurality of battery modules fit the thermal management system and are put into a box to be assembled into a battery pack, and the battery pack is directly assembled on the electrical device to provide the electrical energy for the electrical device.

The fixing structure is configured to protect and fix the battery cells. As an example, the fixing structure may be assembled by a plurality of plates and strip-shaped pieces. The fixing structure of the battery generally includes an end cap and an insulator. As found by the inventor through research, when the battery is assembled, after the end cap and the insulator of the battery are fixed, a junction of the end cap and the insulator is prone to water ingress, and waterproof performance of the battery is poor.

In order to solve the problem of poor waterproof performance of the battery after the fixing of the end cap and the insulator, through in-depth research, the inventor designs a cover assembly. The cover assembly includes an end cap and an insulator. The end cap is provided with a bulge portion, and the insulator is provided with a mounting hole. The bulge portion is clamped in the mounting hole to fix the insulator to the end cap. In this way, the battery modules enable fixed connection between the end cap and the insulator without the use of a rivet, an adhesive or other parts, which avoids water ingress at junctions of the external parts and the cover assembly, thereby solving the problem of poor waterproof performance of the battery.

A battery provided by an embodiment of the present application may be used in an electrical device using the battery as a power supply or various energy storage systems using the battery as an energy storage element. The electrical device may be, but is not limited to, a mobile phone, a tablet, a laptop computer, an electric toy, an electric tool, an electric power cart, an electric vehicle, a ship, a spacecraft, or the like. The electric toy may include stationary or mobile electric toys, such as a game console, an electric car toy, an electric ship toy, and an electric airplane toy. The spacecraft may include an airplane, a rocket, a space shuttle, a spaceship, or the like.

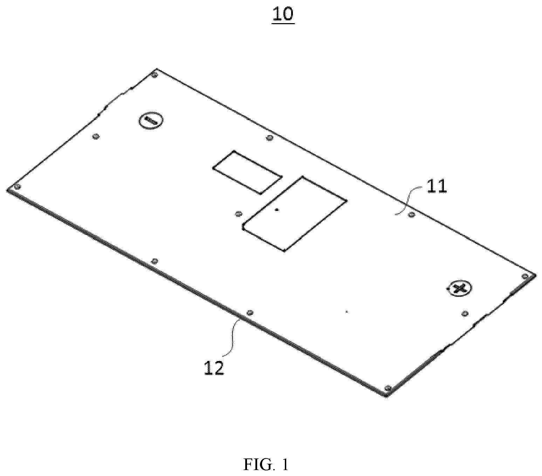

An embodiment in a first aspect of the present application provides a cover assembly disposed in a battery. Referring to FIG. 1 to FIG. 3B, the cover assembly 10 includes an end cap 11 and an insulator 12.

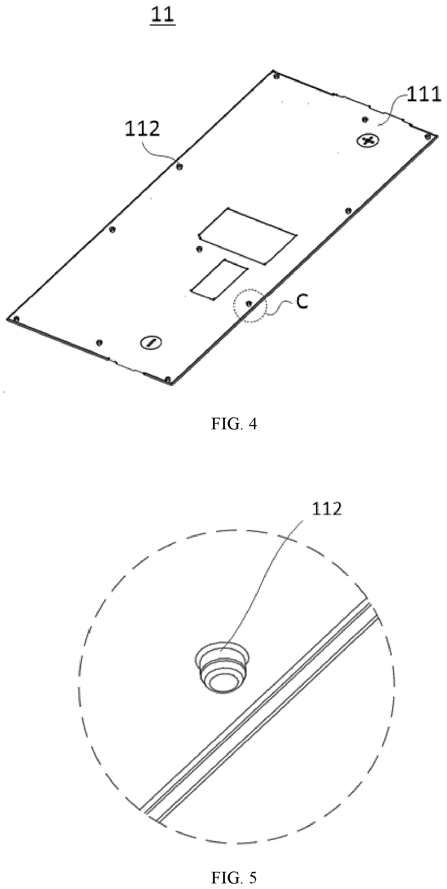

Referring to FIG. 4 and FIG. 5 at the same time, the end cap 11 includes a cap body 111 and a bulge portion 112 protrusively disposed on the cap body 111. The bulge portion 112 and the cap body 111 are integrally molded.

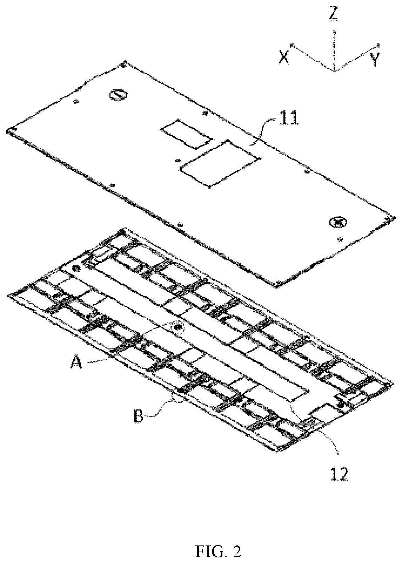

Referring to FIG. 2 to FIG. 6, the insulator 12 is internally provided with a mounting hole 121. The bulge portion 112 is clamped in the mounting hole 121 to connect the insulator 12 to the end cap 11.

The cover assembly 10 is used in the battery. The battery may further include a plurality of battery cells and a lower housing (not shown in the drawing). The end cap 11 is fixed to one side of the plurality of battery cells, and the insulator 12 is disposed between the end cap 11 and the plurality of battery cells.

The end cap 11 may be blister molded, and thus has a simple manufacturing method. The end cap 11 is relatively low in weight, which reduces the weight of the battery. Both the cap body 111 and the bulge portion 112 are integrally blister molded. Understandably, the end cap 11 may also be injection molded.

The insulator 12 serves a function of isolating and insulating. The insulator 12 may be a harness isolation plate. The battery cells in the battery are connected in series or in parallel through a busbar. In order to collect a temperature and a voltage of the battery, it is necessary to connect harnesses to the busbar. However, the harnesses need to be isolated to avoid a phenomenon of a short circuit. The harness isolation plate can isolate the busbar from the harnesses connected thereto. Therefore, as a key part of the battery, the performance of the harness isolation plate is related to the safety of the battery. The insulator 12 may also be other elements capable of insulating and is not limited to the harness isolation plate. For example, the insulator 12 may be an insulating plate or an insulating frame. The insulator 12 may be injection molded, and thus has a simple manufacturing method. Understandably, the insulator 12 may also be blister molded.

The mounting hole 121 on the insulator 12 may be a through hole running through the insulator 12, and may also be a blind hole. The mounting hole 121 may be a circular hole, an oval hole, a square hole, or other polygonal holes, as long as the mounting hole 121 can fit the bulge portion 112.

The bulge portion 112 is clamped in the mounting hole 121. Understandably, manners for clamping include interference fit, snap connection, or the like, which is not limited in the present application.

During assembly, the end cap 11 and the insulator 12 are press-fitted to clamp the bulge portion 112 into the mounting hole 121. That is, the insulator 12 and the end cap 11 may be connected in a clamped manner. The above cover assembly 10 has a simple, convenient and less time-consuming assembly process, is relatively high in assembly efficiency, and is convenient to disassemble. When the battery needs to be maintained, the bulge portion 112 may be moved out of the mounting hole 121, and then the end cap 11 may be separated from the insulator 12, without affecting the maintenance of the battery.

The above cover assembly 10 includes the end cap 11 and the insulator 12. The end cap 11 includes the cap body 111 and the bulge portion 112 integrally molded with the cap body 111. The insulator 12 is internally provided with the mounting hole 121, and the bulge portion 112 is clamped in the mounting hole 121 to connect the insulator 12 to the end cap 11. Since the bulge portion 112 and the upper cap body 111 are integrally molded, the bulge portion 112 and the upper cap body 111 are connected without a clearance, it is not necessary to use rivets, adhesives or other external parts, and the situation of water ingress at junctions of the external parts and the cover assembly 10 is also avoided, thereby improving the waterproof performance of the battery. In addition, the cover assembly 10 has a simple assembly method, and may use an automated assembly method, which improves the assembly efficiency. Additionally, since it is not necessary to use the rivets or the other external parts, the cover assembly 10 has fewer parts, and is simple in structure and relatively low in cost.

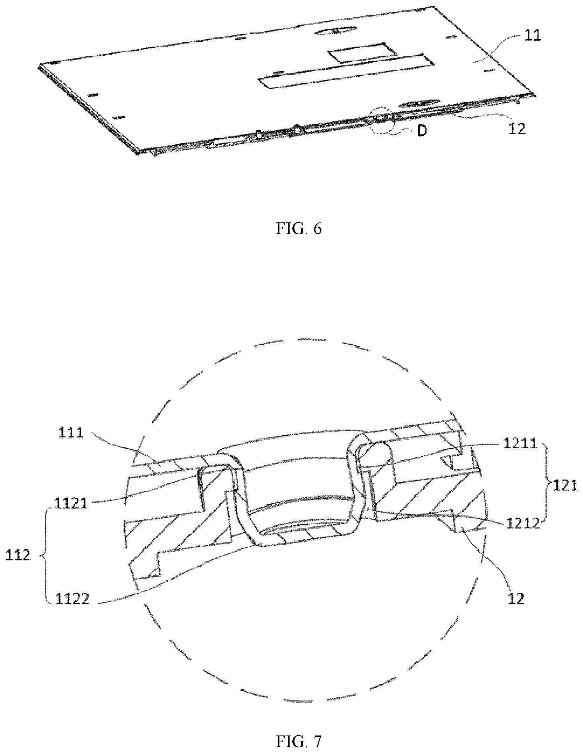

Referring to FIG. 7, in some embodiments, the bulge portion 112 is connected to the mounting hole 121 in an interference-fit manner.

Specifically, a maximum cross-section dimension of the bulge portion 112 is less than that of the mounting hole 121. Therefore, when the end cap 11 and the insulator 12 are assembled, the bulge portion 112 is in interference fit with the mounting hole 121.

The end cap 11 is generally a plate-shaped member. The end cap 11 has a thickness direction, a length direction and a width direction. In the drawing, a Z direction is the thickness direction of the end cap 11, an X direction is the length direction of the end cap 11, and a Y direction is the width direction of the end cap 11. Dimensions of the end cap 11 in both the width direction and the length direction are greater than a dimension in the thickness direction. The length direction and the width direction of the end cap 11 define a plate face of the end cap 11. The bulge portion 112 is a structure that bulges relative to the plate face of the end cap 11, has an approximately columnar overall appearance, and has an axis that is basically perpendicular to the plate face of the end cap 11. A cross section of the above bulge portion 112 refers to a section perpendicular to the axis, and at different positions of the axis, the cross section may have the same or different areas. For example, as shown in FIG. 7, the cross section of the bulge portion 112 progressively increases first and then progressively decreases in a direction from an upper surface of the cap body 111 to a lower surface of the cap body 111, and a cross section corresponding to a position where the area changes from progressive increasing to progressively decreasing is a maximum cross section of the bulge portion 112. Similarly, a cross section of the mounting hole 121 refers to a section that is perpendicular to an axis of the mounting hole 121, and at different positions of the axis of the mounting hole 121, the cross section of the mounting hole 121 may have the same or different areas. For example, as shown in FIG. 7, a cross section of an end that is of the mounting hole 121 close to the cap body 111 is less than a cross section of an end that is of the mounting hole 121 and that is away from the cap body 111.

Since the maximum cross-section dimension of the bulge portion 112 is less than that of the mounting hole 121, a gap between the bulge portion 112 and the mounting hole 121 may be closed by an interference fit between part of the bulge portion 112 and the mounting hole 121. Understandably, the entire bulge portion 112 may also be in interference fit with the mounting hole 121.

By adopting the above technical solution, the gap between the bulge portion 112 and the mounting hole 121 is closed, which avoids moisture from flowing to the mounting hole 121 via the bulge portion 112 and further flowing into the battery, thereby improving the waterproof performance of the battery.

Still referring to FIG. 7, in some embodiments, the mounting hole 121 includes a first hole 1211 and a second hole 1212 that are coaxially disposed. The first hole 1211 is downward formed from an upper plate face of the insulator 12. The second hole 1212 communicates with the first hole 1211 and is located below the first hole 1211. A maximum cross-section dimension of the first hole 1211 is less than that of the second hole 1212. The bulge portion 112 is connected to the first hole 1211 in an interference-fit manner and extends into the second hole 1212.

Specifically, the first hole 1211 communicates with the second hole 1212, and axes of the first hole 1211 and the second hole 1212 are parallel to the thickness direction of the insulator 12. The maximum cross-section dimension of the first hole 1211 is less than that of the second hole 1212. For example, the first hole 1211 and the second hole 1212 may be circular holes, and then a hole diameter of the first hole 1211 is less than that of the second hole 1212. For another example, the first hole 1211 and the second hole 1212 may be oval holes, and then the maximum cross-section dimension of the first hole 1211 is also less than that of the second hole 1212. Understandably, the first hole 1211 and the second hole 1212 may have the same or different shapes.

During assembly, the bulge portion 112 is inserted in the second hole 1212 via the first hole 1211. Since the maximum cross-section dimension of the first hole 1211 is less than that of the second hole 1212, and the maximum cross-section dimension of the bulge portion 112 is greater than that of the first hole 1211, the bulge portion 112 may at least be in interference fit with the first hole 1211 to avoid the bulge portion 112 from easily detaching from the first hole 1211.

By adopting the above technical solution, the mounting hole 121 includes the first hole 1211 and the second hole 1212. The bulge portion 112 may be connected to the first hole 1211 in the interference-fit manner, such that the bulge portion 112 is clamped in the first hole 1211 to avoid the bulge portion 112 from detaching from the first hole 1211, and in turn, the connection between the end cap 11 and the insulator 12 is relatively stable.

In some embodiments, the bulge portion 112 includes a first end 1121 connected to the cap body 111 and a second end 1122 coaxially connected to the first end 1121. The second end 1122 extends into the second hole 1212, and a clearance exists between the second end 1122 and a hole wall of the second hole 1212.

In addition, since the maximum cross-section dimension of the first hole 1211 is less than that of the second hole 1212, the first end 1121 of the bulge portion 112 is in interference fit with the first hole 1211, and the clearance exists between the second end 1122 of the bulge portion 112 and the hole wall of the second hole 1212, it is convenient for a tool to extend into the clearance for a disassembly action.

By adopting the above technical solution, the first end 1121 of the bulge portion 112 is clamped in the first hole 1211, and the second end 1122 is in clearance fit with the second hole 1212, which can not only realize fixed clamping between the bulge portion 112 and the mounting hole 121, but also facilitate disassembly and maintenance.

In another embodiment, a maximum cross-section dimension of the second end 1122 may be greater than that of the first end 1121, and then the second end 1122 may fit snugly with the hole wall of the second hole 1212.

Referring to FIG. 5 and FIG. 7 at the same time, in some embodiments, a cross-section dimension of the second end 1122 gradually decreases in a direction away from the first end 1121.

By adopting the above technical solution, the cross-section dimension of the second end 1122 gradually decreases in the direction away from the first end 1121. That is, the second end 1122 forms a guiding portion of an inward indented structure, which facilitates mounting of the bulge portion 112 into the mounting hole 121.

In some embodiments, a cross-section dimension of the first end 1121 gradually increases in a direction away from the cap body 111.

In this way, it is convenient for the bulge portion 112 to be clamped into the mounting hole 121. Moreover, after the end cap 11 is connected to the insulator 12, no clearance exists between a position of the first end 1121 having a relatively large cross section and the mounting hole 121, and waterproof performance is good.

In some embodiments, the bulge portion 112 is a hollow column.

The bulge portion 112 may be of a structure such as a cylinder, an elliptic cylinder, a prism, and the bulge portion 112 is of a hollow structure. When the end cap 11 is molded, the bulge portion 112 is recessed toward one side from the cap body 111, and then the hollow column may be formed. The bulge portion 112 and the cap body 111 are integrally connected, which realizes a relatively high connection strength.

By adopting the above technical solution, the bulge portion 112 is of a closed structure and has good waterproof performance. The bulge portion 112 has a simple forming method, and the cost of the cover assembly 10 is relatively low. In addition, the connection strength between the bulge portion 112 and the cap body 111 is relatively high.

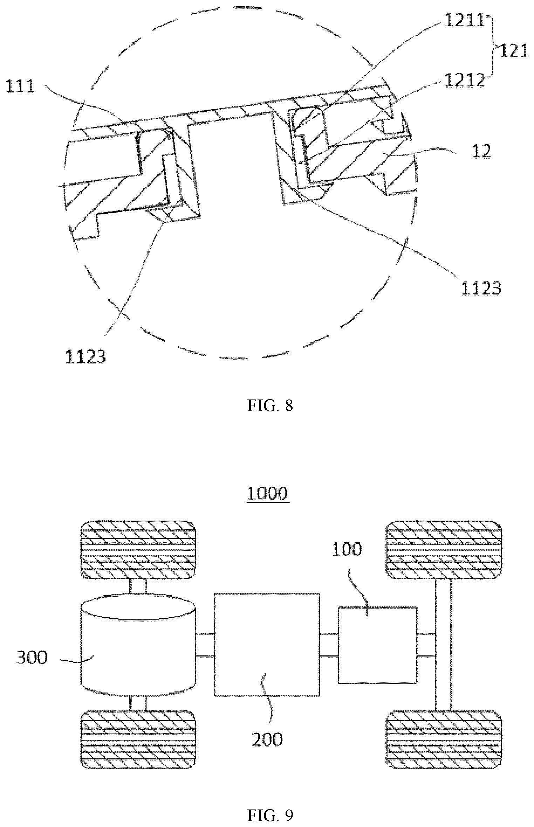

The shape of the bulge portion 112 is not limited to a column. Referring to FIG. 8, in some embodiments, the bulge portion 112 includes at least two snap-hooks 1123, and the snap-hooks 1123 are clamped in the mounting hole 121.

Optionally, the mounting hole 121 is a through hole. During assembly, the bulge portion 112 is inserted in the mounting hole 121, such that the snap-hooks 1123 of the bulge portion 112 pass through the mounting hole 121 and are clamped at an edge of the mounting hole 121, and then the bulge portion 112 and the mounting hole 121 may be mutually clamped. Alternatively, the snap-hooks 1123 are clamped on a stepped face between the first hole 1211 and the second hole 1212.

By adopting the above technical solution, the bulge portion 112 includes the at least two snap-hooks 1123. The bulge portion 112 is clamped in the mounting hole 121 through the snap-hooks 1123. Since the bulge portion 112 and the cap body 111 are integrally molded, a junction of the bulge portion 112 and the mounting hole 121 has good waterproof performance.

Understandably, the mounting hole 121 may also be a blind hole. In this case, a slot is disposed on a hole wall of the mounting hole 121, and the snap-hooks 1123 may be clamped in the slot of the mounting hole 121.

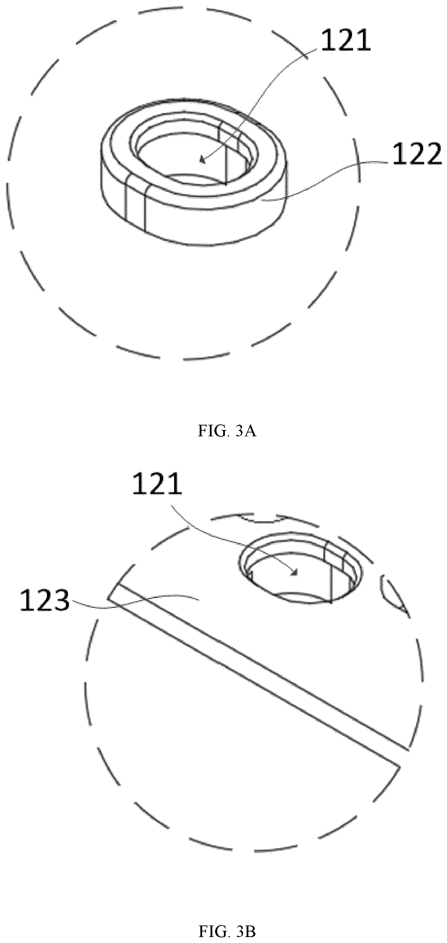

Referring to FIG. 2, FIG. 3A and FIG. 3B, in some embodiments, a boss 122 protruding toward the end cap 11 is disposed on the insulator 12, and the mounting hole 121 is formed in the boss 122.

Since the insulator 12 is relatively thin, by disposing the mounting hole 121 in the boss 122, the mounting hole 121 may have a certain depth, such that a contact area between the mounting hole 121 and the bulge portion 112 is large enough, thereby improving the connection strength and closure of the bulge portion 112 and the mounting hole 121.

In some embodiments, both bulge portion 112 and the mounting hole 121 are plural in number. The plurality of bulge portions 112 are disposed at an edge of the cap body 111 at intervals, and at least one of the bulge portions 112 is disposed in a middle of the cap body 111.

In this way, both the edge and the middle of the end cap 11 can be fixedly connected to the insulator 12 to prevent edge warping or middle warping, and the end cap 11 and the insulator 12 have good flatness.

In some embodiments, an edge of the insulator 12 is provided with a flange 123 by protruding toward the cap body 111. The mounting hole 121 is formed on the flange 123. The bulge portion 112 is disposed on a position of the cap body 111 corresponding to the mounting hole 121.

In this way, the edge of the insulator 12 may be connected to the end cap to avoid the insulator 12 and/or the cap body 111 from edge warping and deforming.

Optionally, the boss 122 is disposed in a middle of the insulator 12. The flange 123 is disposed at the edge of the insulator 12. When the mounting hole 121 is plural in number, a part of the mounting holes 121 are directly formed in the flange 123 of the insulator 12, and mounting holes 121 in the middle of the insulator 12 are formed in the boss 122. In this way, the plurality of mounting holes 121 may have the same height on the insulator 12, which facilitates assembly.

Referring to FIGS. 1 to 8, in an embodiment, the cover assembly 10 includes an end cap 11 and an insulator 12. The end cap 11 includes a cap body 111 and a bulge portion 112 that are integrally molded. The bulge portion 112 is a hollow column. The bulge portion 112 includes a first end 1121 connected to the cap body 111 and a second end 1122 disposed opposite to the first end 1121.

A mounting hole 121 is disposed on the insulator 12. The mounting hole 121 includes a first hole 1211 and a second hole 1212 that are coaxially disposed. The first hole 1211 is closer to the cap body 111 than the second hole 1212. A maximum cross-section dimension of the first hole 1211 is less than that of the second hole 1212. The bulge portion 112 is connected to the first hole 1211 in an interference-fit manner and extends into the second hole 1212. Specifically, the first end 1121 is in interference fit with the first hole 1211, and a clearance exists between the second end 1122 and a hole wall of the second hole 1212.

By adopting the above technical solution, the end cap 11 and the insulator 12 are fixed without the use of rivets, which solves the problem of poor waterproof performance.

Referring to FIG. 1 to FIG. 9, a second aspect of the present application provides a battery 100, including the cover assembly 10 according to the first aspect.

The battery 10 further includes a battery cell. The battery cell may be plural in number. The cover assembly 10 is disposed on one side of the plurality of battery cells, and the insulator 12 is disposed between the end cap 11 and the battery cells.

In some embodiments, the battery 100 further includes a box. The battery cells are accommodated in the box. The cover assembly 10 covers the box.

Certainly, in other embodiments, the battery 100 may not include the box.

A third aspect of the present application provides an electrical device, including the battery 100. The battery 100 is configured to provide electrical energy.

The electrical device may be a device or system that applies any one of the foregoing batteries 100.

The electrical device may be, but is not limited to, a mobile phone, a tablet, a laptop computer, an electric toy, an electric tool, an electric power cart, an electric vehicle, a ship, a spacecraft, or the like. The electric toy may include stationary or mobile electric toys, such as a game console, an electric car toy, an electric ship toy, an electric airplane toy, or the like. The spacecraft may include an airplane, a rocket, a space shuttle, a spaceship, or the like.

For ease of illustration, the following embodiment uses a vehicle 1000 as an example of the electrical device for illustration.

Referring to FIG. 9, FIG. 9 is a schematic structural diagram of a vehicle 1000 provided by some embodiments of the present application. The vehicle 1000 may be an oil-fueled vehicle, a natural gas vehicle, or a new energy vehicle. The new energy vehicle may be a battery electric vehicle, a hybrid electric vehicle, a range-extended electric vehicle, or the like. A battery 100 is disposed inside the vehicle 1000. The battery 100 may be disposed at the bottom, front, or rear of the vehicle 1000. The battery 100 may be configured to supply power to the vehicle 1000. For example, the battery 100 may serve as an operating power supply of the vehicle 1000. The vehicle 1000 may further include a controller 200 and a motor 300. The controller 200 is configured to control the battery 100 to supply power to the motor 300, for example, to meet the working power requirements of the vehicle 1000 in start, navigation and running.

In some embodiments of the present application, the battery 100 serves not only as an operating power supply of the vehicle 1000, but may also serve as a drive power supply of the vehicle 1000 to provide a driving power supply for the vehicle 1000 in place of or partly in place of fuel oil or natural gas.

Finally, it is hereby noted that the foregoing embodiments are merely for describing the technical solutions of the present application rather than for limiting the present application. Although the present application has been described in detail with reference to the foregoing embodiments, a person of ordinary skill in the art should appreciate that they can still make modifications to the technical solutions described in the foregoing embodiments or make equivalent replacements to some or all technical features thereof. However, these modifications or replacements do not cause the essence of the corresponding technical solutions to depart from the scope of the technical solutions of the embodiments of the present application, and shall all fall within the scope of the claims and specification of the present application. In particular, as long as there is no structural conflict, the various technical features mentioned in the embodiments may be combined in any manner. The present application is not limited to the specific embodiments disclosed herein but includes all technical solutions falling within the scope of the claims.

## Claims

1. A cover assembly, **characterized in that** the battery comprises an end cap and an insulator, the end cap comprises a cap body and a bulge portion protrusively disposed on the cap body, the bulge portion and the cap body are integrally molded, the insulator is internally provided with a mounting hole, and the bulge portion is clamped in the mounting hole to connect the insulator to the end cap.

2. The cover assembly according to claim 1, **characterized in that** the bulge portion is connected to the mounting hole in an interference-fit manner.

3. The cover assembly according to claim 2, **characterized in that** the mounting hole comprises a first hole and a second hole that are coaxially disposed, the first hole is closer to the cap body than the second hole, a maximum cross-section dimension of the first hole is less than that of the second hole, and the bulge portion is connected to the first hole in the interference-fit manner and extends into the second hole.

4. The cover assembly according to claim 3, **characterized in that** the bulge portion comprises a first end connected to the cap body and a second end coaxially connected to the first end, the second end extends into the second hole, and a clearance exists between the second end and a hole wall of the second hole.

5. The cover assembly according to claim 4, **characterized in that** a cross-section dimension of the second end gradually decreases in a direction away from the first end.

6. The cover assembly according to claim 4, **characterized in that** a cross-section dimension of the first end gradually increases in a direction away from the cap body.

7. The cover assembly according to any one of claims 1 to 6, **characterized in that** the bulge portion is a hollow column.

8. The cover assembly according to any one of claims 1 to 6, **characterized in that** the bulge portion comprises at least two snap-hooks, and the snap-hooks are clamped in the mounting hole.

9. The cover assembly according to any one of claims 1 to 8, **characterized in that** a boss protruding toward the end cap is disposed on the insulator, and the mounting hole is formed in the boss.

10. The cover assembly according to any one of claims 1 to 9, **characterized in that** both bulge portion and the mounting hole are plural in number, a part of the bulge portions are disposed at an edge of the cap body at intervals, and at least one of the bulge portions is disposed in a middle of the cap body.

11. The cover assembly according to any one of claims 1 to 8, **characterized in that** an edge of the insulator is provided with a flange by protruding toward the cap body, the mounting hole is formed on the flange, and the bulge portion is disposed on a position of the cap body corresponding to the mounting hole.

12. A battery, **characterized in that** the battery comprises the cover assembly according to any one of claims 1 to 11.

13. An electrical device, **characterized in that** the electrical device comprises the battery according to claim 12, and the battery is configured to provide electrical energy.
